# EUROPÄISCHE PATENTANMELDUNG

(11) **EP 0 729 155 A2**
(43) Veröffentlichungstag der Anmeldung: **28.08.1996**
(21) Anmeldenummer: 95112191.2
(22) Anmeldetag: 03.08.1995
(51) Int. Cl.: G11B 33/04, G11B 23/023

(54) **Behälter für Datenträger**

(30) Priorität: 25.02.1995 DE 29503199 U
(71) Anmelder: FUJI MAGNETICS GmbH, D-47533 Kleve (DE)
(72) Erfinder: Cioc, Alexander, D-41464 Neuss (DE)
(74) Vertreter: COHAUSZ HASE DAWIDOWICZ & PARTNER

(57) **Zusammenfassung**

Die Erfindung betrifft einen Behälter für eine Vielzahl aufrecht und dicht nebeneinander stehender Daten-, Bild-, Tonträger, Plastikkarten, insbesondere Disketten, Video-, Daten-, Audiobandkassetten, Compact-Discs, Steamer, Datacartridges, Flashmemorycards, Chipkarten oder deren Verpackungen, wobei
- die Oberseite 3 des Behälterbodens 1 in einzelne Standflächen S aufgeteilt ist,
- die Länge L jeder Standfläche S der Länge eines Datenträgers an einer Datenträgerstirnseite entspricht,
- die Breite B jeder Standfläche S der vielfachen Breite einer Datenträgerstirnseite entspricht und
- an einer Standfläche S mit jeweils einer Seite angrenzende Standflächen zumindest nahe der Seite eine unterschiedliche Höhe zur waagerechten Behälterunterseite (4) haben als die eine Standfläche S.

## Beschreibung

Die Erfindung betrifft einen Behälter für eine Vielzahl aufrecht und dicht nebeneinander stehender Daten-, Bild-, Tonträger, Plastikkarten, insbesondere Disketten, Video-, Daten-, Audiobandkassetten, Compact-Discs, Steamer, Datacartridges, Flashmemorycards, Chipkarten oder deren Verpackungen.

Es ist bekannt, mehrere Datenträger insbesondere Disketten zu zehn oder mehr Stück in einen Karton zu verpacken. Dies erfordert beim Käufer der Datenträger, daß diese ausgepackt werden müssen, wobei Abfall anfällt.

Aufgabe der Erfindung ist es, einen Behälter zu schaffen, der mehrfach verwendbar ist, der eine größere Anzahl von Datenträgern aufnehmen kann, indem die Datenträger so angeordnet sind, daß sie in ihrer Anzahl und Vollständigkeit leicht übersehen werden können.

Diese Aufgabe wird erfindungsgemäß dadurch gelöst,
- daß die Oberseite des Behälterbodens in einzelne Standflächen aufgeteilt ist,
- daß die Länge jeder Standfläche der Länge eines Datenträgers an einer Datenträgerstirnseite entspricht,
- daß die Breite jeder Standfläche der vielfachen Breite einer Datenträgerstirnseite entspricht und
- daß an einer Standfläche mit jeweils einer Seite angrenzende Standflächen zumindest nahe der Seite eine unterschiedliche Höhe zur waagerechten Behälterunterseite haben als die eine Standfläche.

Durch einen in solcher Weise geformten Boden des Behälters bildet sich die Bodenform auf der Oberseite aller Datenträger ab, so daß Anzahl und Vollständigkeit mit einem Blick leicht erfaßbar sind. Dies ist nicht nur ein Vorteil bei der Anlieferung der Datenträger, sondern auch während der Entnahme, insbesondere für eine Weiterverarbeitung. Die Restmengen sind in ihrer Anzahl leicht erkennbar, so daß sofort sichtbar ist, wieviele Datenträger weggearbeitet wurden, bzw. wieviele restliche verblieben sind.

Ein umständliches Auspacken entfällt und es entsteht auch kein Abfall. Der leere Behälter wird als Mehrwegbehälter an den Hersteller bzw. Lieferant zurückgesandt. Darüberhinaus ist ein Beladen dieser Behälter besonders einfach und schnell handhabbar.

Besonders vorteilhaft ist es, wenn der Höhenunterschied 3 bis 20 mm insbesondere 4 bis 12 mm beträgt, da dann die Oberseiten der Kassetten ausreichend große Stufen für ein Erkennen bilden. In einer Ausführungsform wird vorgeschlagen, daß jede zweite Standfläche tiefer liegt als alle angrenzenden Standflächen. Hierbei können die Standflächen gegenüber der Behälterunterseite geneigt angeordnet sein. Dies läßt ein besonders einfaches Beladen zu. Vorzugsweise wird hierbei vorgeschlagen, daß die Neigung 2 bis 20 Grad vorzugsweise 5 bis 15 Grad beträgt.

In einer weiteren vorzugsweisen Ausgestaltung besitzen die geneigten Standflächen einer Reihe in ihrer Mitte die gleiche Höhe. Auch ist es von größtem Vorteil, wenn die geneigten Standflächen einer Reihe zumindest in ihrer Mitte eine unterschiedliche Höhe als die Standflächen einer benachbarten Reihe aufweisen. Hierbei können die Oberseiten einer Reihe von Standflächen ein Sägezahnprofil bilden.

Damit die Behälter beim Zurücksenden wenig Platz benötigen, wird vorgeschlagen, daß alle Seitenwände am Behälterboden angelenkt und in eine waagerechte Stellung klappbar sind. Hierbei können die Scharniere Filmscharniere sein.

Besonders vorteilhaft ist es, wenn er aus Kunststoff insbesondere aus Polypropylen ist, der antistatisch ausgerüstet ist. Eine besonders einfache Konstruktion wird gebildet, wenn er durch einen Deckel verschließbar ist, der von einem Boden gebildet ist, dessen Seitenwände entfernt sind.

Von Vorteil ist es, wenn die Innenseiten der Seitenwände Markierungen über die Anzahl der Datenträger aufweisen.

Auch sollte an mindestens einer Seitenwand eine Leiste vorstehen, die die Datenträger in ihrer Schrägstellung hält.

Ein Ausführungsbeispiel der Erfindung ist in den Zeichnungen dargestellt und wird im folgenden näher beschrieben. Es zeigen:
- Figur 1:: Einen senkrechten Schnitt durch den Behälter nach I-I in Figur 2.
- Figur 2:: Eine Draufsicht auf den Behälter in einer Teilansicht und
- Figur 3:: einen senkrechten Schnitt durch den Behälter nach III-III in Figur 2.

Der Behälter weist einen waagerechten Boden 1 auf, an dem vier Seitenwände 2 durch Filmscharniere angelenkt sind. Bei mit Datenträgern insbesondere Disketten, CD's, Kassetten oder Steckkarten bzw. einschließlich Verpackungen gefüllten Behältern stehen die Seitenwände 2 senkrecht und sind ineinander an den Ecken eingerastet.

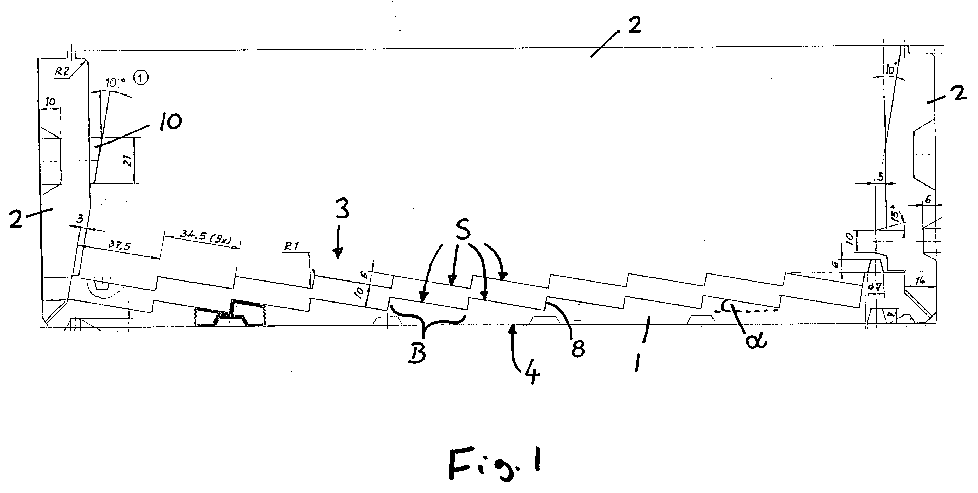

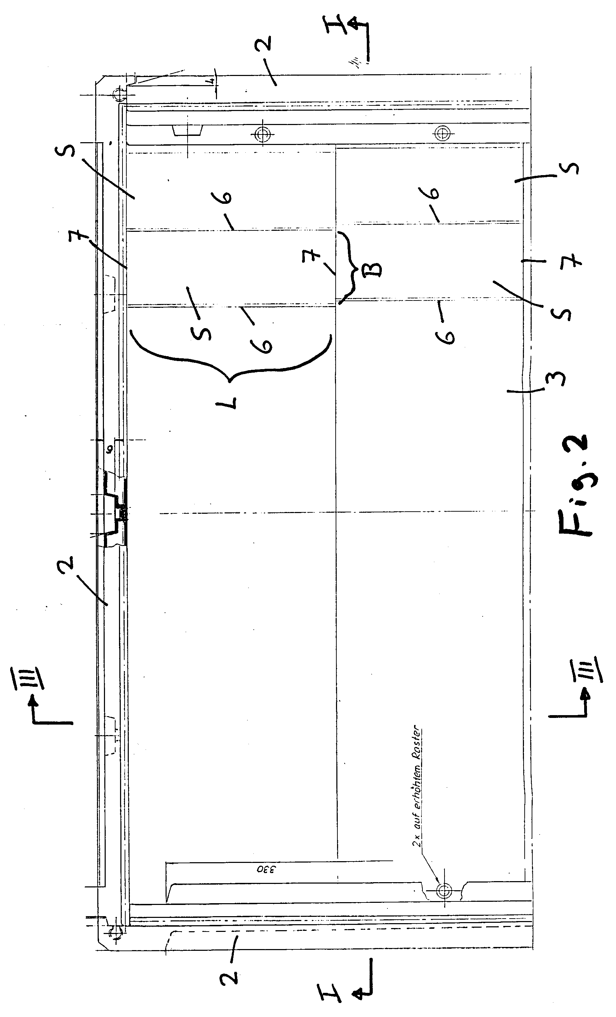

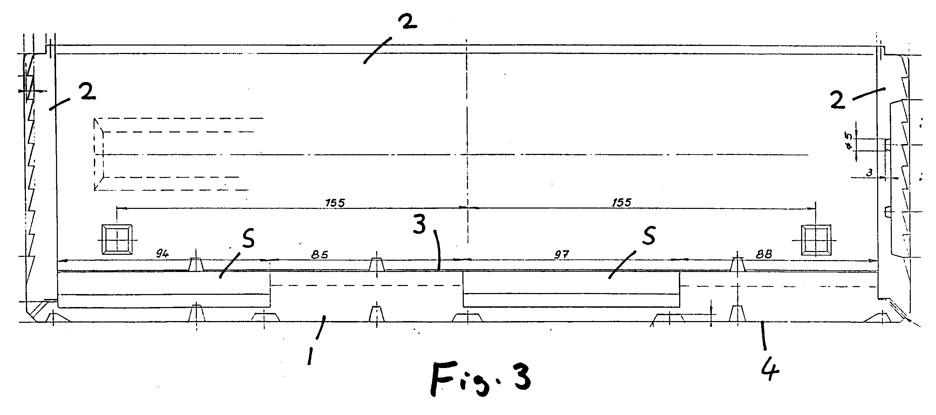

Die Obersetie 3 des Bodens 1 ist in einzelne Standflächen S aufgeteilt, die ohne Zwischenwände direkt aneinander liegen wobei in den in Figur 1 bis 3 gezeigten Ausführungsbeispielen jede Standfläche zur waagerechten Behälterunterseite 4 geneigt angeordnet ist in einem Winkel α von vorzugsweise 10 Grad. Alle Standflächen S bilden dieselbe Neigung in derselben Richtung, wobei die in einer Reihe 5 liegenden 10 Standflächen S eine Oberfläche in Form eines Sägezahnprofils bilden. Hierbei liegen die vier parallel nebeneinander liegenden Reihen 5 in unterschiedlichen Höhen, so daß die Standfläche einer Reihe 5 höher oder niedriger liegt als die Standfläche einer benachbarten Reihe 5.

Jede Standfläche S ist von vier Seiten 6, 7 begrenzt, wobei die Seiten 6 an der Längsseite der Länge L über eine Stufe 8 an die benachbarte Standfläche S angrenzt und an der schmalen Seite 7 über eine weitere Stufe, die dem Höhenunterschied der beiden Reihen 5 entspricht. Die Höhe der Stufen 8 hängt von der Neigung α als auch von der Breite B der Standflächen S ab. Die Breite B der Standflächen entspricht einer bestimmten Anzahl der nebeneinander aufrecht stehenden Datenträger, so daß die Breite B einer Vielzahl der Breite der Datenträger insbesondere eine 10-fache Breite ist. Die Länge L der Standfläche entspricht dagegen direkt der Länge des Datenträgers.

In diesem Ausführungsbeispiel stehen somit alle Datenträger etwas schräg entsprechend dem Winkel α gleich 10 Grad gegenüber einer Senkrechten. In einem anderen, nicht dargestellten Ausführungsbeispiel sind die Standflächen S einer Reihe 5 nicht jeweils zumindest im mittleren Bereich in derselben Höhe, sondern in unterschiedlichen Höhen, wobei die Standflächen S vorzugsweise waagerecht liegen. In einer solchen Schachbrettartigen Anordnung der Standflächen S befinden sich alle an einer Standfläche angrenzenden benachbarten Standflächen in einer anderen Höhe als diese eine Standfläche, so daß wiederrum an der Oberseite aller Datenträger sich diese Ausbildung der Oberseite 3 des Bodens 1 abbildet und damit die Anzahl der Datenträger als auch deren Vollständigkeit gut ersichtlich ist.

Vorzugsweise ist der Behälter aus Kunststoff, insbesondere aus Polypropylen gefertigt, der antistatisch ausgerüstet ist. Die Innenseiten der Seitenwände weisen Markierungen auf, um auch hierüber noch besser über die Anzahl der Datenträger informiert zu sein. Bei den schräggestellten Standflächen S entsprechend dem Ausführungsbeispiel nach Figur 1 bis 3 weist eine Innenseite einer Seitenwand 2 eine nach innen vorstehende Leiste 10 auf, die dafür sorgt, daß die schrägstehenden Datenträger in ihrer schrägen Stellung erhalten werden.

Der Deckel des Behälters wird vorzugweise von einem Boden 1 gebildet, dessen Seitenwände 2 entfernt sind. Hierzu braucht nur im Bereich des Filmscharniers dieses durchschnitten zu werden.

## Patentansprüche

1. Behälter für eine Vielzahl aufrecht und dicht nebeneinander stehender Daten-, Bild-, Tonträger, Plastikkarten, insbesondere Disketten, Video-, Daten-, Audiobandkassetten, Compact-Discs, Steamer, Datacartridges, Flashmemorycards, Chipkarten oder deren Verpackungen, **dadurch gekennzeichnet,**
- daß die Oberseite (3) des Behälterbodens (1) in einzelne Standflächen (S) aufgeteilt ist,
- daß die Länge (L) jeder Standfläche (S) der Länge eines Datenträgers an einer Datenträgerstirnseite entspricht,
- daß die Breite (B) jeder Standfläche (S) der vielfachen Breite einer Datenträgerstirnseite entspricht und
- daß an einer Standfläche (S) mit jeweils einer Seite angrenzende Standflächen zumindest nahe der Seite eine unterschiedliche Höhe zur waagerechten Behälterunterseite (4) haben als die eine Standfläche (S).

2. Behälter nach Anspruch 1, **dadurch gekennzeichnet,** daß der Höhenunterschied 3 bis 20 mm insbesondere 4 bis 12 mm beträgt.

3. Behälter nach Anspruch 1 oder 2, **dadurch gekennzeichnet,** daß jede zweite Standfläche (S) tiefer liegt als alle angrenzenden Standflächen (S).

4. Behälter nach einem der vorherigen Ansprüche, **dadurch gekennzeichnet,** daß die Standflächen (S) gegenüber der Behälterunterseite (4) geneigt angeordnet sind.

5. Behälter nach Anspruch 4, **dadurch gekennzeichnet,** daß die Neigung (α) 2 bis 20 Grad vorzugsweise 5 bis 15 Grad beträgt.

6. Behälter nach Anspruch 4 oder 5, **dadurch gekennzeichnet,** daß die geneigten Standflächen (S) einer Reihe (5) in ihrer Mitte die gleiche Höhe besitzen.

7. Behälter nach Anspruch 6, **dadurch gekennzeichnet,** daß die geneigten Standflächen (S) einer Reihe (5) zumindest in ihrer Mitte eine unterschiedliche Höhe als die Standflächen (S) einer benachbarten Reihe (5) aufweisen.

8. Behälter nach einem der Ansprüche 4 bis 7, **dadurch gekennzeichnet,** daß die Oberseite einer Reihe von Standflächen (S) ein Sägezahnprofil bildet.

9. Behälter nach einem der vorherigen Ansprüche, **dadurch gekennzeichnet,** daß alle Seitenwände (2) am Behälterboden (1) angelenkt und in eine waagerechte Stellung klappbar sind.

10. Behälter nach Anspruch 8, **dadurch gekennzeichnet,** daß die Scharniere Filmscharniere sind.

11. Behälter nach einem der vorherigen Ansprüche, **dadurch gekennzeichnet,** daß er aus Kunststoff insbesondere aus Polypropylen ist, der antistatisch ausgerüstet ist.

12. Behälter nach einem der vorherigen Ansprüche, **dadurch gekennzeichnet,** daß er durch einen Deckel verschließbar ist, der von einem Boden (1) gebildet ist, dessen Seitenwände entfernt sind.

13. Behälter nach einem der vorherigen Ansprüche, **dadurch gekennzeichnet,** daß die Innenseiten der Seitenwände (2) Markierungen über die Anzahl der Datenträger aufweisen.

14. Behälter nach einem der vorherigen Ansprüche, **dadurch gekennzeichnet,** daß an mindestens einer Seitenwand (2) eine Leiste (10) vorsteht, die die Datenträger in ihrer Schrägstellung hält.
